# EUROPÄISCHE PATENTSCHRIFT

(11) **EP 3 341 215 B1**
(45) Veröffentlichungstag und Bekanntmachung des Hinweises auf die Patenterteilung: **02.10.2019**
(21) Anmeldenummer: 16757638.8
(22) Anmeldetag: 25.08.2016
(51) Int. Cl.: B42D 1/00, B42D 3/12, B42D 25/22, B42D 25/24, G06K 19/07, G06K 19/073

(54) **BUCHARTIGES DOKUMENT, INSBESONDERE IDENTIFIKATIONSDOKUMENT, MIT EINEM TRANSPONDERMODUL UND VERFAHREN ZUM SICHERN VON DATEN IN EINEM BUCHARTIGEN DOKUMENT**
BOOK-LIKE DOCUMENT, IN PARTICULAR AN IDENTIFICATION DOCUMENT, WITH A TRANSPONDER MODULE AND METHOD FOR SECURING DATA IN A BOOK-LIKE DOCUMENT
DOCUMENT DE TYPE LIVRE, EN PARTICULIER UN DOCUMENT D'IDENTIFICATION, AVEC UN MODULE TRANSPONDEUR ET PROCÉDÉ POUR SÉCURISER DES DONNÉES DANS UN DOCUMENT DE TYPE LIVRE

(30) Priorität: 27.08.2015 DE 102015114227
(43) Veröffentlichungstag der Anmeldung: 04.07.2018
(73) Patentinhaber: Bundesdruckerei GmbH, 10969 Berlin (DE)
(72) Erfinder: TSCHAKERT, Daniel, 15526 Bad Saarow (DE); SEIJO BOLLIN, Hans-Peter, 10245 Berlin (DE)
(74) Vertreter: Mammel und Maser
(86) Internationale Anmeldenummer: PCT/EP2016/070071
(87) Internationale Veröffentlichungsnummer: WO 2017/032826

(56) Entgegenhaltungen:
- DE-A1-102013 221 768
- US-A1- 2007 152 829

## Beschreibung

Die Erfindung betrifft ein buchartiges Dokument, insbesondere Identifikationsdokument, mit einem Bucheinband, welcher eine Buchdeckenvorderseite und eine Buchdeckenrückseite umfasst, mit einer oder mehreren Datenseiten und/oder mit einer Personalisierdatenseite und mit einem in dem Bucheinband oder der Personalisierdatenseite angeordneten Transpondermodul, welches eine Antenne und einen IC-Chip umfasst. Des Weiteren betrifft die Erfindung ein Verfahren zum Sichern von Daten in einem buchartigen Dokument.

Aus der DE 10 2013 221 768 A1 ist ein buchartiges Dokument, insbesondere Identifikationsdokument, bekannt, welches einen Bucheinband mit einer Buchdeckenvorderseite und einer Buchdeckenrückseite umfasst. Dieser Bucheinband nimmt mehrere Datenseiten und eine Personalisierdatenseite auf. Im Bucheinband ist ein Chip mit einer Antenne vorgesehen. Des Weiteren ist in der Personalisierdatenseite ein Permanentmagnet vorgesehen, welcher als Steuerelement für einen Sensor dient, der mit einem Schalter verbunden ist. Der Schalter unterbricht und schließt die Antennenwindung des IC-Chips. Solange das Dokument geschlossen ist, befindet sich der Permanentmagnet über dem Sensor, so dass der Reed-Schalter einen ersten Schaltzustand hat, und zwar geschlossen ist. In diesem Schaltzustand ist der Antennenschwingkreis unterbrochen. Ein Auslesen der Daten ist nicht gegeben. Aus der DE 10 2008 023 411 A1 ist ein solches buchartiges Dokument bekannt. Bei diesem buchartigen Dokument ist eine Personalisierdatenseite mit einem Transpondermodul vorgesehen, welche beispielsweise in einem Bucheinband zusammen mit mehreren Datenseiten eingebracht ist. Zum Auslesen der Daten aus der Personalisierdatenseite wird das buchartige Dokument aufgeklappt.

Aus der DE 60 2004 005 241 T2 ist des Weiteren ein buchartiges Dokument mit einem Transpondermodul bekannt, bei welchem zum Schutz vor einem unerwünschten elektronischen Ansprechen oder elektronischen Auslesen von Daten des Transpondermoduls im buchartigen Dokument eine Abschirmung vorgesehen ist. Diese Abschirmung umfasst eine passive Abdeckung, wie beispielsweise eine Schicht oder Folie in einer Buchdeckeneinlage, die einer Antenne des Transpondermoduls zumindest bereichsweise zugeordnet ist. Durch diese als metallische Schicht aufgebrachte Abschirmung soll sichergestellt werden, dass in einem geschlossenen Zustand des buchartigen Dokumentes ein unerwünschtes Auslesen der Daten aus dem Transpondermodul verhindert ist. Ein analoger Aufbau ist aus der JP 11-348471 A bekannt.

Der Erfindung liegt die Aufgabe zugrunde, ein buchartiges Dokument, insbesondere Identifikationsdokument, vorzuschlagen, bei welchem ein unerwünschtes elektronisches Auslesen von Daten aus einem Transpondermodul des buchartigen Dokumentes verhindert ist.

Der Erfindung liegt des Weiteren die Aufgabe zugrunde, ein Verfahren zum Sichern von Daten in einem Transpondermodul in einem buchartigen Dokument vorzuschlagen, um ein unerwünschtes elektronisches Auslesen von Daten bei einem geschlossenen oder teilweise geschlossenen buchartigen Dokument zu unterbinden.

Diese Aufgabe wird durch ein buchartiges Dokument mit den Merkmalen des Anspruchs 1 gelöst. Dadurch wird bei einem geschlossenen oder teilweise geschlossenen buchartigen Dokument das Transpondermodul in einen inaktiven Zustand übergeführt, so dass durch Einbringen eines Wechselfeldes auf das buchartige Dokument, welches üblicherweise zum Auslesen der Daten aus dem Transpondermodul erzeugt wird, ein elektronisches Auslesen von Daten nicht mehr möglich ist und das Transpondermodul bei einem solchen Versuch zum Auslesen von Daten nicht arbeitet. Durch das zumindest eine Steuerelement wird der Sensor geschalten, der wiederum das Transpondermodul aktiviert oder deaktiviert. Unter einer "geschlossenen Anordnung" der Buchdeckenvorderseite zur Buchdeckenrückseite beziehungsweise einem geschlossenen buchartigen Dokument wird verstanden, dass die Buchdeckenrückseite und Buchdeckenvorderseite sowie die dazwischen liegenden Seiten aneinander anliegen. Unter einer "teilweise geschlossenen Anordnung" der Buchdeckenvorderseite zur Buchdeckenrückenseite beziehungsweise eines teilweise geschlossenen buchartigen Dokuments wird verstanden, dass die Buchdeckenvorderseite gegenüber der Buchdeckenrückseite in einer V-förmigen Anordnung vorliegt, insbesondere in einem Winkel zueinander von weniger als 45°, insbesondere weniger als 25°, so dass nur einzelne - jedoch nicht alle - Seiten des buchartigen Dokuments aneinander liegen.

Als ein magnetoresistiver Sensor wird ein Schaltelement verstanden, welcher beim Vorhandensein eines Magnetfeldes einen ersten Schaltzustand und beim Abschwächen oder Entfernen eines Magnetfeldes einen zweiten Schaltzustand einnimmt. Bei einer geschlossenen Anordnung der Buchdeckenvorderseite und Buchdeckenrückseite des buchartigen Dokumentes wirkt das Magnetfeld des Steuerelementes auf den magnetoresistiven Sensor. Dadurch wird der Sensor kontaktlos geschalten, insbesondere geöffnet. Sobald das buchartige Dokument geöffnet wird, wird das durch das Steuerelement erzeugte Magnetfeld geändert oder aufgehoben und der magnetoresistive Sensor wieder in seinen zweiten Schaltzustand, insbesondere geschlossen, gesetzt. Dadurch kann die Ansteuerung des Transpondermoduls in den aktiven oder inaktiven Zustand erfolgen.

Der magnetoresistive Sensor ist als Schaltkontakt ausgebildet, der einen Schaltkreis des Transpondermoduls unterbricht. Dabei kann der magnetoresistive Sensor beispielsweise unmittelbar in dem IC-Chip des Transpondermoduls eingebracht sein, um dort als Öffner oder Schließer zu wirken. Des Weiteren kann alternativ der magnetoresistive Sensor als veränderbarer Widerstand ausgebildet sein, der das Transpondermodul in einen aktiven oder inaktiven Zustand versetzt.

Bevorzugt leitet das Steuerelement mit zunehmendem Abstand zum Sensor beim Aufklappen der Buchdeckenvorderseite zur Buchdeckenrückenseite einen Schaltvorgang des Sensors ein, der einen zweiten Schaltzustand einnimmt und das Transpondermodul aktiviert. Beispielsweise können das Steuerelement in der Buchdeckenrückseite und der Sensor in der Personalisierdatenseite oder der Buchdeckenvorderseite angeordnet sein. Sobald durch Aufklappen der Buchdeckenvorderseite mit der Personalisierdatenseite zur Buchdeckenrückseite das Steuerelement in der Buchdeckenrückseite von der Personalisierdatenseite oder der Buchdeckenvorderseite weiter entfernt wird, erfolgt der Schaltvorgang des Sensors. Alternativ kann das Steuerelement anstelle in der Buchdeckenrückseite auch in den Datenseiten eingebunden sein. Beim Öffnen des buchartigen Dokumentes, insbesondere beim Auffächern der Datenseite gegenüber der Personalisierdatenseite oder der Buchdeckenvorderseite, erfolgt wieder eine zunehmende Beabstandung des Steuerelementes zum Sensor, wodurch der Schaltvorgang des Sensors eingeleitet wird.

Bevorzugt ist das zumindest eine Steuerelement als Permanentmagnet ausgebildet. Dadurch kann ein kontaktloses Schalten des Sensors erfolgen, sobald das durch den Permanentmagnet ausgebildete Magnetfeld dem Sensor überlagert ist beziehungsweise der Sensor innerhalb des Magnetfeldes des Steuerelementes liegt.

Eine nicht erfindungsgemäße Ausführungsform sieht vor, dass der Sensor als ein Reed-Kontakt ausgebildet ist. Dadurch kann beim Vorhandensein eines Magnetfeldes ein Schaltzustand erzeugt und beim Abschwächen oder Entfernen eines Magnetfeldes ein zweiter Schaltzustand angesteuert werden. Folglich kann der Reed-Kontakt analog zum vorbeschriebenen magnetoresistiven Sensor arbeiten und angesteuert sein.

Nach einer bevorzugten Ausgestaltung der Erfindung besteht der magnetoresistive Sensor aus wenigstens zwei Schichten aus einem magnetisierbaren Material, die durch eine Trennlage zueinander getrennt sind. Dadurch kann beispielsweise in einer Schicht durch das von dem Verschlusselement erzeugte Magnetfeld eine Widerstandsänderung erzielt werden und in der benachbarten Schicht nicht. Durch einen Vergleich der beiden Widerstandswerte wird diese Differenz erfasst und ausgewertet. Beispielsweise kann die Schlussfolgerung getroffen werden, dass bei einer Differenz gleich Null das buchartige Dokument geschlossen ist, da auf beide Schichten das Magnetfeld der Verschlusselemente wirkt, wodurch das Transpondermodul inaktiv geschalten wird.

Eine weitere alternative Ausgestaltung eines magnetoresistiven Sensors sieht vor, dass dieser aus zumindest einer Schicht besteht, welche das Transpondermodul umgibt und leitfähige Partikel umfasst. Dadurch kann in Abhängigkeit des Magnetfelds eine Ausrichtung der leitfähigen Partikel geschaffen werden, um dadurch das Transpondermodul in einen aktiven oder nicht aktiven Zustand überzuführen.

Eine bevorzugte Ausführungsform des buchartigen Dokuments sieht vor, dass das Transpondermodul und der Sensor gemeinsam in die Buchdeckenvorderseite, die Buchdeckenrückseite oder in die Personalisierdatenseite eingebracht sind. Dadurch wird die Herstellung des buchartigen Dokumentes vereinfacht.

Des Weiteren ist bevorzugt das zumindest eine Steuerelement zumindest in der Buchdeckenvorderseite, der Buchdeckenrückseite, in der Personalisierseite oder in einer der Datenseite vorgesehen. Die Anordnung des zumindest einen Steuerelementes ist abhängig von der Positionierung des Sensors. Sofern der Sensor beispielsweise in der Personalisierdatenseite vorgesehen ist, kann das Steuerelement sowohl in der Buchdeckenvorderseite, der Buchdeckenrückseite oder in einer der Datenseiten vorgesehen sein. Es können auch zwei oder mehrere Steuerelemente vorgesehen werden, so dass bei einer geschlossenen Anordnung des buchartigen Dokumentes beidseits zum Sensor Steuerelemente angeordnet sind. Sofern der Sensor beispielsweise in der Buchdeckenrückseite vorgesehen ist, kann das zumindest eine Steuerelement in der Personalisierdatenseite oder in einer der Datenseiten oder der Buchdeckenvorderseite vorgesehen sein. Sofern der Sensor anstelle in der Buchdeckenrückseite in der Buchdeckenvorderseite vorgesehen ist, gilt Analoges.

Des Weiteren ist bevorzugt in einer geschlossenen Anordnung der Buchdeckenvorderseite und der Buchdeckenrückseite dem Sensor gegenüberliegend das zumindest eine Steuerelement zugeordnet. Dadurch kann sichergestellt werden, dass auch bei einem schwachen, durch das Steuerelement gebildeten Magnetfeld ein sicheres Schalten des Sensors kontaktlos erfolgt.

Des Weiteren ist das aus einem permanentmagnetischen Material bestehende Steuerelement als Blättchen oder Streifen oder als eine Schicht in der Buchdeckenvorderseite oder Buchdeckenrückenseite ausgebildet, die sich zumindest teilweise, abschnittsweise oder vollständig entlang der Buchdeckenvorderseite oder Rückseite erstreckt.

Die der Erfindung zugrundeliegende Aufgabe wird des Weiteren durch ein Verfahren zum Sichern von Daten in einem Transpondermodul in einem buchartigen Dokument gegen unerwünschtes Auslesen durch Dritte dadurch gelöst, dass beim Überführen einer Buchdeckenvorderseite und einer Buchdeckenrückseite des buchartigen Dokumentes aus einer aufgeklappten Gebrauchsposition in eine geschlossene Anordnung oder zumindest teilweise geschlossene Anordnung durch zumindest ein Steuerelement ein magnetoresistiver Sensor aktiviert wird, der mit dem Transpondermodul kontaktiert ist und das Transpondermodul durch den aktivierten Sensor deaktiviert wird, so dass ein unerwünschtes elektronisches Auslesen von Daten aus dem Transpondermodul unterbunden wird. In einer ersten Ausführungsform ist der magnetoresistive Sensor als Schaltkontakt ausgebildet, so dass ein Schaltkreis des Transpondermoduls unterbrochen oder geschlossen wird. In einer zweiten Alternative ist der magnetoresistive Sensor als Widerstand ausgebildet, durch welchen das Transpondermodul in einen aktiven oder inaktiven Zustand versetzt wird. Durch das Kontaktlos-Schalten des Sensors mit dem Steuerelement kann das Transpondermodul beim Aufklappen des buchartigen Dokumentes zur Einsichtnahme oder zur Überprüfung von Daten automatisch in einen Betriebsbereitschaftszustand gesetzt werden und beim Schließen des buchartigen Dokumentes in einen Sperrzustand oder Ruhezustand, in welchem das elektronische Auslesen von Daten nicht möglich ist.

Bevorzugt ist vorgesehen, dass beim Überführen der Buchdeckenvorderseite und der Buchdeckenrückseite in die geschlossene Anordnung oder teilweise geschlossene Anordnung durch das zumindest eine Steuerelement in der geschlossenen Anordnung ein Magnetfeld auf den Sensor wirkt und der Sensor aktiviert und das Transpondermodul durch den Sensor deaktiviert wird. Somit bedarf es keiner zusätzlichen Aktivierung des Sensors oder des Transpondermoduls, vielmehr wird durch diese Anordnung beim Schließen des buchartigen Dokumentes automatisch das Transpondermodul deaktiviert und in einen Sicherheitsmodus übergeführt, der das elektronische Auslesen der Daten verhindert.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Ansicht auf eine erste Ausführungsform eines buchartigen Dokumentes,
Figur 2 eine schematische Ansicht des buchartigen Dokumentes gemäß Figur 1 in einer geschlossenen Anordnung, und
Figur 3 eine schematische Ansicht einer zweiten alternativen Ausführungsform des buchartigen Dokumentes zu Figur 1.

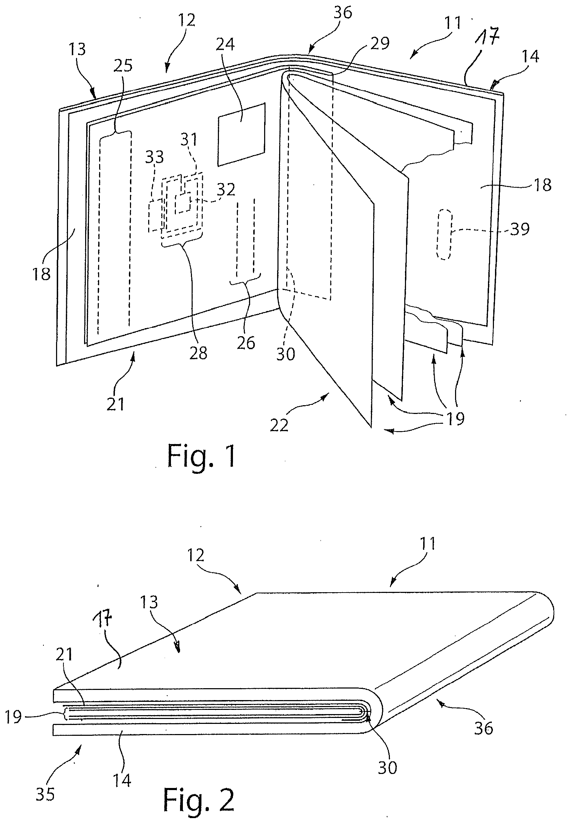

In Figur 1 ist ein buchartiges Dokument 11 dargestellt. Bei diesem buchartigen Dokument 11 handelt es sich beispielsweise um ein Wert- und/oder Sicherheitsdokument, insbesondere um einen Reisepass. Dieses Dokument 11 umfasst einen Bucheinband 12 mit einer Buchdeckenvorderseite 13 und einer Buchdeckenrückseite 14. Diese Buchdeckenvorderseite 13 und die Buchdeckenrückseite 14 können beispielsweise wenigstens eine Buchdeckeneinlage, die an deren Außenseite beispielweise einen Buchdeckeneinband 17 aufweisen, umfassen, wobei an der jeweiligen Innenseite der Buchdeckenvorderseite 13 und Buchdeckenrückseite 14 ein Vorsatz 18 aufgebracht sein kann. Bevorzugt sind der Buchdeckeneinband 17 und der Vorsatz 18 durch Verklebung mit der zumindest einen Buchdeckeneinlage verbunden.

Der Bucheinband 12 nimmt mehrere Datenseiten 19 auf. Bevorzugt ist auch eine Personalisierdatenseite 21 vorgesehen. Die Datenseite 19 und/oder die Personalisierdatenseite 21 und der Vorsatz 18 sind vorzugsweise zu einem Buchblock 22 miteinander verbunden und in dem Bucheinband 12 befestigt. Beispielsweise können die Datenseiten 19 und/oder die Personalisierdatenseite 21 und der Vorsatz 18 durch eine Naht zu einem Buchblock miteinander verbunden sein.

Die Personalisierdatenseite 21 ist beispielsweise gemäß ICAO-Standard ausgebildet und umfasst ein Bild 24 des Dokumenteninhabers, eine OCR (Optical Character Recognition)-maschinenlesbare Zeile 25 sowie weitere Personalisierdaten 26.

Die Personalisierdatenseite 21 umfasst gemäß diesem Ausführungsbeispiel des Weiteren ein Transpondermodul 28, in welchem die Daten des Dokumenteninhabers und weitere Sicherheitsmerkmale abgespeichert sein können. Die Personalisierdatenseite 21 ist beispielsweise als Einlegeblatt ausgebildet und kann gemäß dem Ausführungsbeispiel eine Lasche 29 umfassen, die sich über einen Nahtbereich 30 hinaus erstreckt. Alternativ kann anstelle der Lasche 29 eine vollständige Personalisier- oder Datenseite vorgesehen sein.

Die Personalisierdatenseite 21 umfasst wenigstens zwei Kunststoffschichten, die miteinander laminiert sind und einen Folienverbund bilden. Dazwischenliegend ist das Transpondermodul 28 mit einer gegebenenfalls eingebrachten Ausgleichsschicht vorgesehen. Das Transpondermodul 28 kann beispielsweise einen IC-Chip 32 sowie eine Antenne 31 umfassen. Vorzugsweise kann zwischen den zumindest zwei äußeren Kunststoffschichten eine weitere Schicht, insbesondere aus Papier, eingebracht sein, welche die Personalisierdaten 26 sowie das Bild 24 und die OCR-maschinenlesbare Zeile 25 umfasst. Bevorzugt sind die äußeren Kunststoffschichten aus Polycarbonat ausgebildet und umhüllen die innenliegende Schicht bevorzugt vollständig.

Die Personalisierdatenseite 21 weist des Weiteren einen Sensor 33 auf, der mit dem Transpondermodul 28 kontaktiert, insbesondere elektrisch kontaktiert ist. Dieser Sensor 33 ist analog wie das Transpondermodul 28 in die Personalisierdatenseite 21 eingebracht und durch die zumindest zwei äußeren Kunststoffschichten des Folienverbundes vollständig umgeben.

In der Buchdeckenrückseite ist ein Steuerelement 39 angeordnet, welches als Permanentmagnet ausgebildet sein kann. Dieses Steuerelement 39 liegt bei einer geschlossenen Anordnung 35, welche in Figur 2 dargestellt ist, vorteilhafterweise unmittelbar dem Sensor 33 gegenüber. Bevorzugt sind das Steuerelement 39 und der Sensor 33 zumindest bereichsweise einander zugeordnet.

Gemäß einer ersten Ausführungsform ist der Sensor 33 als magnetoresistiver Sensor ausgebildet, beispielsweise als ein Schaltkontakt, der einen Schaltkreis des Transpondermoduls 28 unterbricht oder schließt. Sofern auf den Sensor 33 ein durch das Steuerelement 39 erzeugtes Magnetfeld wirkt, unterbricht der Sensor 33 den Schaltkreis des Transpondermoduls 28, so dass dieses deaktiviert ist. Somit ist bei einer geschlossenen Anordnung 35 des buchartigen Dokumentes 11 ein Auslesen von Daten aus dem Transpondermodul 28 nicht mehr möglich. Beispielsweise kann der Sensor 33 als Schalter ausgebildet sein, der in die Antenne 31 des Transpondermoduls 28 integriert ist und eine Antennenwindung unterbricht oder schließt. In einer nicht erfindungsgemäßen Ausführung kann alternativ zum magnetoresistiven Sensor ein sogenannter Reed-Kontakt vorgesehen sein, der in Analogie zum magnetoresistiven Sensor aktivier- und deaktivierbar ist.

Der Sensor 33 kann auch direkt einen Schaltkreis im IC-Chip 32 des Transpondermoduls 28 ansteuern, also öffnen und schließen. Der Sensor 33 kann auch in dem Transpondermodul 28 integriert sein.

Des Weiteren kann der Sensor 33 als Widerstand ausgebildet sein, der beim Vorhandensein des durch die Verschlusselemente 34 erzeugten Magnetfeldes seinen Widerstand ändert und das Transpondermodul 28 ansteuert.

In Figur 2 ist eine schematische Ansicht des buchartigen Dokumentes 11 gemäß Figur 1 in einer geschlossenen Anordnung 35 dargestellt. Die geschlossene Anordnung 35 kann selbstständig aufrechterhalten werden, und dennoch ist ein manuelles Öffnen des buchartigen Dokumentes 11 für jedermann möglich. Beispielsweise kann die geschlossene Anordnung 35 dadurch erzielt werden, dass im Bereich des Buchrückens eine Klammer oder ein Klammerelement eingearbeitet oder aufgebracht ist, welches sich zumindest abschnittsweise entlang des Buchrückens 36 erstreckt, durch welche nach dem Öffnen des buchartigen Dokumentes 11 ein selbständiges Überführen in die geschlossene Anordnung 35 ermöglicht wird. Des Weiteren kann diese geschlossene Anordnung 35 auch dadurch erzielt werden, dass beispielsweise an dem dem Buchrücken 36 gegenüberliegenden Ende eine Lasche mit einem lösbaren Verschluss vorgesehen ist, durch welchen die Buchdeckenvorderseite 13 und die Buchdeckenrückseite 14 zueinander geschlossen gehalten werden. Auch kann eine geschlossene Anordnung 35 dadurch erzielt werden, dass das buchartige Dokument 11 in eine Hülle zumindest teilweise eingesteckt ist. Des Weiteren können Verschlusselemente, insbesondere magentische und/oder mechanisch lösbare Verschlusselemente, wie beispielsweise durch Verrasten, Verklipsen, Verhaken oder Verklemmen, vorgesehen sein, durch welche das buchartige Dokument 11 in einer geschlossenen Anordnung 35 gehalten wird.

Durch die geschlossene Anordnung 35 ist ein visuelles Auslesen der Daten insbesondere auf der Personalisierdatenseite 21 unterbunden. Des Weiteren ist durch die geschlossene Anordnung 35 sichergestellt, dass ein elektronisches Auslesen des Transpondermoduls 28 unterbunden ist, da durch das Steuerelement 39 der Sensor 33 geschalten ist, welcher wiederum das Transpondermodul 28 in einen inaktiven Zustand schaltet. Beim Öffnen der Buchdeckenvorderseite 13 gegenüber der Buchdeckenrückseite 14 wird das durch das Steuerelement 39 wirkende Magnetfeld gegenüber dem Sensor 33 reduziert oder aufgehoben, wodurch der Sensor 33 in seinen zweiten Schaltzustand übergeführt und demzufolge das Transpondermodul 28 angesteuert und in einen aktiven Zustand gesetzt wird. Dieser aktive Zustand des Transpondermoduls 28 ermöglicht das elektronische Auslesen der darin gespeicherten Daten, beispielsweise für eine Passkontrolle.

Das Steuerelement 39 kann als Blättchen oder Streifen ausgebildet sein, welches in die Buchdeckenvorderseite 13, die Buchdeckenrückseite 14, die Personalisierdatenseite 21 und/oder die Datenseite 19 integriert ist. Alternativ kann das Steuerelement 39 auch durch eine Paste oder aufdruckbare Schicht ausgebildet sein, welche nach dem Aushärten oder nach dem Einbinden in die Buchdeckenvorderseite 13, die Buchdeckenrückseite 14, die Personalisierdatenseite 21 und/oder die Datenseite 19 als Permanentmagnet wirkt. Bei der Buchdeckenvorderseite und Buchdeckenrückseite 13, 14 kann das Schaltelement 39 auf einer Buchdecke aufgebracht und vom Vorsatz 18 überdeckt sein. Ebenso kann die Buchdecke eine Vertiefung oder Ausnehmung aufweisen, um das Steuerelement 39 aufzunehmen.

Solche buchartigen Dokumente 11 weisen zumeist ein Aufsperrverhalten auf, das heißt, dass nach dem Überführen des buchartigen Dokumentes 11 aus einer geöffneten Position gemäß Figur 1 in die geschlossene Anordnung 35 gemäß Figur 2 sich die Buchdeckenvorderseite 13 gegenüber der Buchdeckenrückseite 14 leicht öffnet, das heißt, dass sich die Buchdeckenvorderseite 13 gegenüber der Buchdeckenrückseite 14 leicht abhebt, sofern das buchartige Dokument 11 auf der Buchdeckenrückseite 14 auf einer Auflage aufliegt. Analoges gilt, wenn das buchartige Dokument 11 mit der Buchdeckenvorderseite 13 auf einer Auflage aufliegt. Bei einer solchen teilweise geschlossenen Anordnung, bei der die Buchdeckenvorderseite 13 zur Buchdeckenrückseite 14 V-förmig angeordnet ist, insbesondere in einem Winkel von weniger als 45°, kann das Steuerelement 39 derart ausgelegt werden, dass der Sensor 33 bereits aktiviert und das Transpondermodul 28 deaktiviert ist. Das heißt, dass auch im teilweise geschlossenen Zustand bereits die Sicherheitsfunktion gegen unerwünschtes elektronisches Auslesen von Daten aus dem Transpondermodul 28 gegeben ist.

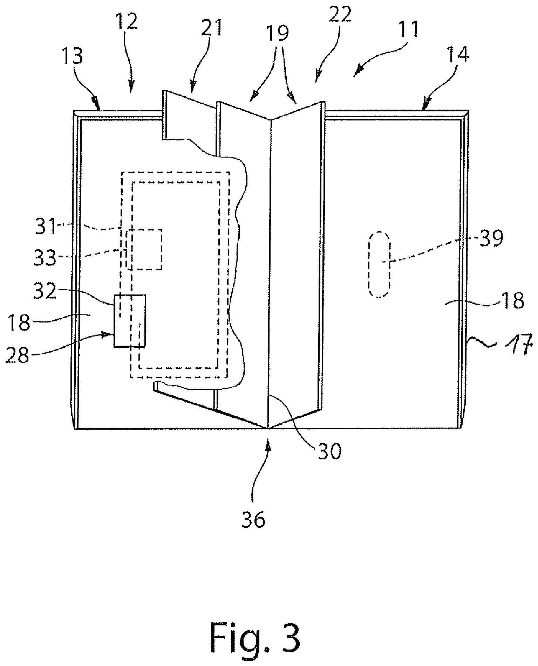

In Figur 3 ist eine alternative Ausführungsform des buchartigen Dokumentes 11 zu Figur 1 dargestellt. Diese Ausführungsform weicht dahingehend ab, dass das Transpondermodul 28 und der Sensor 33 in der Buchdeckenvorderseite 13 angeordnet sind. Das Steuerelement 39 ist bevorzugt in der Buchdeckenrückseite vorgesehen, wobei in einer geschlossenen Anordnung das Steuerelement 39 unmittelbar dem Sensor 33 zugeordnet ist beziehungsweise dieses zumindest teilweise, vorzugsweise vollständig, überdeckt. Bei der Anordnung des Sensors 33 und des Transpondermoduls 28 in der Buchdeckenvorderseite 13 kann das Steuerelement 39 alternativ in der Personalisierdatenseite 21 und/oder einer Datenseiten 19 vorgesehen sein. Alternativ können der Sensor 33 und das Transpondermodul 28 auch in der Buchdeckenrückseite 14 vorgesehen sein. Dementsprechend kann das Steuerelement 39 in der Buchdeckenvorderseite oder Personalisierdatenseite 21 und/oder einer der Datenseiten 19 vorgesehen sein.

Bei beiden Ausführungsformen gemäß den Figuren 1 bis 3 wird durch das als Permanentmagnet ausgebildete Steuerelement 39 ermöglicht, dass das buchartige Dokument 11 selbstständig in einer Nichtgebrauchsposition oder in einer geschlossenen Anordnung 35 in einen inaktiven Zustand gesetzt wird. Durch den Sensor 33, der durch das Magnetfeld des Steuerelementes 39 aktiviert ist, ist das Transpondermodul 28 deaktiviert. Somit kann ein elektronisches Auslesen von Daten aus dem Transpondermodul 28 verhindert sein.

Ein Auslesen der Daten des buchartigen Dokumentes 11 erfolgt bei den vorbeschriebenen Ausführungsformen derart, dass zunächst mit einer Optik die OCR-Zeile 25 und/oder weitere Daten optisch ausgelesen werden und darauffolgend ein elektronisches Auslesen von Daten aus dem Transpondermodul 28 erfolgt.

### Bezugszahlenliste

11. Buchartiges Dokument
12. Bucheinband
13. Buchdeckenvorderseite
14. Buchdeckenrückseite
17. Buchdeckeneinband
18. Vorsatz
19. Datenseite
21. Personalisierdatenseite
22. Buchblock
24. Bild
25. Zeile
26. Personalisierdaten
28. Transpondermodul
29. Lasche
30. Nahtbereich
31. Antenne
32. IC-Chip
33. Sensor
35. Geschlossene Anordnung
36. Buchrücken
39. Steuerelement

## Patentansprüche

1. Buchartiges Dokument, insbesondere Identifikationsdokument, mit einem Bucheinband (12), welcher eine Buchdeckenvorderseite (13) und eine Buchdeckenrückseite (14) umfasst, mit einer oder mehreren Datenseiten (19) und/oder mit einer Personalisierdatenseite (21) und mit einem in dem Bucheinband (12) oder der Personalisierdatenseite (21) angeordneten Transpondermodul (28), welches eine Antenne (31) und einen IC-Chip (32) umfasst, und mit einem Sensor (33), der mit dem Transpondermodul (28) kontaktiert ist und das Transpondermodul (28) aktiviert und deaktiviert und mit zumindest einem Steuerelement (39), welches in einer geschlossenen oder teilweise geschlossenen Anordnung der Buchdeckenvorderseite (13) zur Buchdeckenrückseite (14) den als magnetoresistiven Sensor ausgebildeten Sensor (33) in einen Schaltzustand setzt, der das Transpondermodul (28) deaktiviert, **dadurch gekennzeichnet, dass** der magnetoresistive Sensor (33), aus wenigstens zwei Schichten aus einem magnetisierbaren Material besteht, die durch eine Trennlage zueinander getrennt sind, oder der aus zumindest einer Schicht besteht, welche das Transpondermodul (28) umgibt und leitfähige und in Abhängigkeit eines Magnetfelds ausrichtbare Partikel umfasst, als Schaltkontakt ausgebildet ist, der einen Schaltkreis des Transpondermoduls (28) unterbricht oder schließt oder dass der magnetoresistive Sensor (33) als Widerstand ausgebildet ist, der das Transpondermodul (28) in einen aktiven oder inaktiven Zustand versetzt.

2. Buchartiges Dokument nach Anspruch 1, **dadurch gekennzeichnet, dass** das Steuerelement (39) mit zunehmendem Abstand zum Sensor (33) beim Aufklappen der Buchdeckenvorderseite (13) zur Buchdeckenrückseite (14) einen Schaltvorgang des Sensors (33) einleitet, der einen zweiten Schaltzustand einnimmt und das Transpondermodul (28) aktiviert.

3. Buchartiges Dokument nach Anspruch 1 oder 2, **dadurch gekennzeichnet, dass** das Steuerelement (39) als Permanentmagnet ausgebildet ist.

4. Buchartiges Dokument nach Anspruch 1, **dadurch gekennzeichnet, dass** das Transpondermodul (28) und der Sensor (33) gemeinsam in dem Bucheinband (12) oder der Personalisierdatenseite (21) vorgesehen sind.

5. Buchartiges Dokument nach einem der vorhergehenden Ansprüche, **dadurch gekennzeichnet, dass** das zumindest eine Steuerelement (39) zumindest in der Buchdeckenvorderseite (13), der Buchdeckenrückseite (14) oder in einer der Datenseiten (19) oder der Personalisierdatenseite (21) vorgesehen ist.

6. Buchartiges Dokument nach einem der vorhergehenden Ansprüche, **dadurch gekennzeichnet, dass** in einer geschlossenen Anordnung (35) der Buchdeckenvorderseite (13) und der Buchdeckenrückseite (14) dem Sensor (33) gegenüberliegend das Steuerelement (39) zugeordnet ist.

7. Buchartiges Dokument nach Anspruch 3, **dadurch gekennzeichnet, dass** das als Permanentmagnet ausgebildete Steuerelement (39) als Blättchen oder Streifen ausgebildet ist.

8. Verfahren zum Sichern von Daten in einem Transpondermodul (28) in einem buchartigen Dokument (11) nach einem der Ansprüche 1 bis 7, gegen unerwünschtes Auslesen durch Dritte, **dadurch gekennzeichnet, dass** beim Überführen einer Buchdeckenvorderseite (13) und einer Buchdeckenrückseite (14) des buchartigen Dokumentes (11) aus einer aufgeklappten Gebrauchsposition in eine geschlossene Anordnung (35) oder teilweise geschlossene Anordnung durch zumindest ein Steuerelement (39) ein magnetoresistiver Sensor (33) aktiviert wird, der mit dem Transpondermodul (28) kontaktiert ist, und dass ein Schaltkreis des Transpondermoduls (28) durch den aktivierten Sensor (33) unterbrochen oder geschlossen wird oder dass der magnetoresistive Sensor (33) als Widerstand ausgebildet ist, der das Transpondermodul (28) in einem aktiven oder inaktiven Zustand versetzt, und ein unerwünschtes Auslesen der Daten aus dem Transpondermodul (28) unterbunden wird.

9. Verfahren nach Anspruch 8, **dadurch gekennzeichnet, dass** beim Überführen der Buchdeckenvorderseite (13) und der Buchdeckenrückseite (14) die geschlossene Anordnung (35) oder teilweise geschlossene Anordnung des buchartigen Dokumentes (11) durch das zumindest eine Steuerelement (39) ein Magnetfeld auf den Sensor (33) wirkt und der Sensor (33) aktiviert und das Transpondermodul (28) deaktiviert wird.

## Claims

1. A book-like document, in particular an identification document, having a binding (12), which comprises a book case front cover page (13) and a book case back cover page (14), having one or a plurality of data pages (19) and/or a personalisation data page (21) and a transponder module (28) incorporated in the binding (12) or in the personalisation data page (21) and comprising an antenna (31) and an IC chip (32), and having a sensor (33) which is in contact with said transponder module (28) and activates and deactivates the transponder module (28), and having at least one control element (39) which, when in a closed or partially closed disposition of the book case front cover page (13) with respect to the book case back cover page (14), will cause the sensor (33), which is realised in the form of a magnetoresistive sensor, to assume a switching state that deactivates said transponder module (28), **characterised in that** the magnetoresistive sensor (33) consists of at least two layers of a magnetisable material which are separated from each other by means of a separation layer or consists of at least one layer which surrounds the transponder module (28) and contains conductive particles that are orientable in accordance with a magnetic field, **in that** it is realised as a switching contact which interrupts or closes a circuit of the transponder module (28) or **in that** the magnetoresistive sensor (33) is realised as a resistor which sets the transponder module (28) to an active or an inactive state.

2. The book-like document as claimed in claim 1, **characterised in that** the control element (39) initiates a switching operation of the sensor (33) which will assume a second switching state and activate the transponder module (28), as the distance separating said control element from the sensor (33) increases while the book case front cover page (13) and the book case back cover page (14) are opened.

3. The book-like document as claimed in claim 1 or 2, **characterised in that** the control element (39) is realised as a permanent magnet.

4. The book-like document as claimed in claim 1, **characterised in that** the transponder module (28) and the sensor (33) are both provided in the binding (12) or in the personalisation data page (21).

5. The book-like document as claimed in any of the preceding claims, **characterised in that** the at least one control element (39) is provided at least in the book case front cover page (13), the book case back cover page (14) or in one of the data pages (19) or in the personalisation data page (21).

6. The book-like document as claimed in any of the preceding claims, **characterised in that** when the book case front cover page (13) and the book case back cover page (14) are in a closed disposition (35), the control element (39) is arranged opposite to the sensor (33) with which is associated.

7. The book-like document as claimed in claim 3, **characterised in that** the control element (39) which is realised as a permanent magnet is shaped in the form of a leaflet or strip.

8. A method for securing data contained in a transponder module (28) incorporated in a book-like document (11) as claimed in any one of claims 1 to 7 so as to provide protection against undesirable readout by third parties, **characterised in that** when a book case front cover page (13) and a book case back cover page (14) of the book-like document (11) are converted from an opened use position to a closed disposition (35) or a partially closed disposition, a control element (39) activates a magnetoresistive sensor (33) which is in contact with the transponder module (28), and **in that** a circuit of the transponder module (28) is interrupted or closed by the activated sensor (33) or **in that** the magnetoresistive sensor (33) is realised as a resistor that sets the transponder module (28) in an active or inactive state, thus precluding any undesirable readout of data from said transponder module (28) .

9. The method as claimed in claim 8, **characterised in that** when the book case front cover page (13) and the book case back cover page (14) are converted to the closed disposition (35), or partially closed disposition, of the book-like document (11), a magnetic field caused by the at least one control element (39) is exerted on the sensor (33), thereby activating the sensor (33) and deactivating the transponder module (28).

## Revendications

1. Document de type livret, en particulier document d'identification, pourvu d'une reliure (12) qui comprend une page avant de couverture de livret (13) et une page arrière de couverture de livret (14), pourvu d'une ou de plusieurs pages de données (19) et/ou d'une page de données de personnalisation (21) et d'un module transpondeur (28) disposé dans la reliure (12) ou dans la page de données de personnalisation (21) et comprenant une antenne (31) et une puce IC (32), et pourvu d'un capteur (33) qui est mis en contact avec le module transpondeur (28) et active et désactive ledit module transpondeur (28), et pourvu d'au moins un élément de commande (39) qui, lorsque la page avant de couverture de livret (13) se trouve dans une disposition fermée ou partiellement fermée par rapport à la page arrière de couverture de livret (14), met le capteur (33) réalisé en tant que capteur magnétorésistif dans un état de commutation qui désactive le module transpondeur (28), **caractérisé en ce que** le capteur magnétorésistif (33) est composé d'au moins deux couches réalisées en un matériau aimantable lesquelles sont séparées entre elles par une couche de séparation, ou **en ce que** ledit capteur est composé d'au moins une couche qui entoure le module transpondeur (28) et comprend des particules électroconductrices et orientables en fonction d'un champs magnétique donné, et est réalisé en tant que contact de commutation qui interrompt ou ferme un circuit de commutation du module transpondeur (28), ou **en ce que** le capteur magnétorésistif (33) est réalisé en tant que résistance qui met le module transpondeur (28) dans un état actif ou inactif.

2. Document de type livret selon la revendication 1, **caractérisé en ce que**, en raison de la distance croissante qui se crée par rapport au capteur (33) lorsque la page avant de couverture de livret (13) est ouverte par rapport la page arrière de couverture de livret (14), l'élément de commande (39) initie un processus de commutation du capteur (33) lequel prend alors un deuxième état de commutation et active le module transpondeur (28).

3. Document de type livret selon la revendication 1 ou 2, **caractérisé en ce que** l'élément de commande (39) est réalisé en tant qu'aimant permanent.

4. Document de type livret selon la revendication 1, **caractérisé en ce que** le module transpondeur (28) et le capteur (33) sont prévus tous les deux dans la reliure (12) ou dans la page de données de personnalisation (21).

5. Document de type livret selon l'une quelconque des revendications précédentes, **caractérisé en ce que** ledit au moins un élément de commande (39) est prévu au moins dans la page avant de couverture de livret (13), la page arrière de couverture de livret (14) ou dans l'une des pages de données (19) ou dans la page de données de personnalisation (21).

6. Document de type livret selon l'une quelconque des revendications précédentes, **caractérisé en ce que**, lorsque la page avant de couverture de livret (13) et la page arrière de couverture de livret (14) sont dans une disposition fermée (35), l'élément de commande (39) est affecté au capteur (33) en étant situé à l'opposé de celui-ci.

7. Document de type livret selon la revendication 3, **caractérisé en ce que** l'élément de commande (39) réalisé en tant qu'aimant permanent se présente sous forme de plaquette ou de bande.

8. Procédé destiné à sécuriser des données contenues dans un module transpondeur (28) se trouvant dans un document (11) de type livret selon l'une quelconque des revendications 1 à 7, en vue d'empêcher une lecture non désirée desdites données par un tiers, **caractérisé en ce que** lorsque l'on fait passer une page avant de couverture de livret (13) et une page arrière de couverture de livret (14) du document (11) de type livret d'une position d'utilisation ouverte à une disposition fermée (35) ou partiellement fermée, un capteur magnétorésistif (33) qui est mis en contact avec le module transpondeur (28) est activé par au moins un élément de commande (39) et **en ce qu'**un circuit de commutation du module transpondeur (28) est interrompu ou fermé par le capteur (33) activé ou **en ce que** le capteur magnétorésistif (33) est réalisé en tant que résistance qui met le module transpondeur (28) dans un état actif ou inactif, empêchant ainsi une lecture non désirée des données du module transpondeur (28).

9. Procédé selon la revendication 8, **caractérisé en ce que** lorsque l'on fait passer la page avant de couverture de livret (13) et la page arrière de couverture de livret (14) dans la disposition fermée (35) ou partiellement fermée du document (11) de type livret, un champ magnétique agit sur le capteur (33) par l'intermédiaire dudit au moins un élément de commande (39), ce qui active ledit capteur (33) et désactive le module transpondeur (28).
